# EUROPEAN PATENT APPLICATION

(11) **EP 0 547 997 A1**
(43) Date of publication of application: **23.06.1993**
(21) Application number: 92500165.3
(22) Date of filing: 10.12.1992
(51) Int. Cl.: G02B 6/44

(54) **Modular optical fibre distribution frame**

(30) Priority: 12.12.1991 ES 9103757
(71) Applicant: TELEFONICA DE ESPANA, S.A., E-28013 Madrid (ES)
(72) Inventor: Manuel, Fernandez Fernandez, E-28043 Madrid (ES); Jesus, Diaz Cortijo, E-28043 Madrid (ES)
(74) Representative: Sanchez del Campo Gonzalez de Ubierna, Ramon

(57) **Abstract**

The junction and modular optical sharing terminal assembly (1) is constituted by a frame (12) on which several frame-plates (8) are arranged, the function of which is to support tray modules (3), which can be warehousing (6), connector (7) or junction (5) trays, and it is enclosed within an envelope and it has junction (5), connector (7) and warehousing (6) trays, which are similar in their perimetric shape and are topped, at their extremities, by a profile or anchoring band (10) resting on guides (9), which are also similar for the three types of junction (5), warehousing (6) and connector (7) trays, these trays being fitted with a telescopic guide (9) incorporating an anchorage system formed by a moulded part (16) for housing the cards situated at the front side of trays (3), having flexible ends on trigger-bands (15), destined to locking each of the different trays (3) and, also, plugging the space left between them.

## Description

### BACKGROUND OF THE INVENTION

### FIELD OF THE INVENTION

This invention finds its application in the telecommunications field and, specifically, to be used in the substructure of outside plant necessary for creating and maintaining an optical fiber.

### RELATED ART

At present, several junction and modular optical sharing assemblies are known, all them manufactured and designed to allow the housing of junctions, connectors and optical cable.

Nevertheless, all assemblies known until now are unable to exchange the several trays configuring several junction modules, optical sharer and warehousing, for which reason, in view of the need of installing a small number of connectors, it is imperative to install three full modules.

Also, they do not allow an easy access when it is necessary to replace different components of the plant to carry out several installation and maintenance operations thereof.

A solution to this problem would be to relay on a junction and modular optical sharing terminal assembly, in which the several junction modules, connectors and warehousing could dispose of elemental units, so that they could permit an interchangeability and to make a difference of the module because of the units constituting it, these not being specifically junction and sharing or warehousing units, and each module can be configured by different trays, according to the optical fiber plant needs.

Also, if a terminal assembly fitted with these features could dispose of, the arrangement would allow to install a single module having different types of trays and, so, to meet the need of a low capacity of connectors and junctions.

It has been confirmed that, in relation to the access problematics for carrying out different installation and maintenance operations, the solution would be to remove the side partitions in the modules impeding displacements, and a free access to the different cables already installed or to be installed.

Nevertheless, up to now, no junction and modular optical sharing assembly fitted with the features as pointed out as suitable.

### SUMMARY OF THE INVENTION

The junction and modular optical sharing terminal assembly proposed by this invention constitutes itself a clear solution to the above-mentioned problem, which satisfactorily covers the mentioned needs, and evidencing a substantial improvement in the state of the art due to its embodiment.

In a more definite way, the junction and modular optical - sharing terminal assembly of the invention is composed of a vertical frame housing and retaining a set of frame-plates, - each of which supports in turn, several trays by means of its corresponding tray guides.

The assembly has an envelope covering the side parts, and the bottom received the vertical frame.

The junction, connector and warehouse trays are of same dimensions, their extremities ending at the same profile or anchorage band resting on some guides which are also identical for the three types of junction, connector and warehousing trays.

Owing to the above-mentioned, it is deduced that all the trays are interchangeable at any of the housings applied inasmuch as height, so enabling to adapt the assembly to every specific use.

These trays have, at their front side, a moulded part allowing:
- to house the cards showing the contents and use of the tray;
- to plug the space left between trays and corresponding with the vertical modulation of same;
- to shape in it flexible ends which allow to resiliently act on trigger-bands locking the tray in the end positions of its travel.

The trays rest on telescopic guides, so that they allow to be pulled out and be locked up in their end position by means of a trigger-band system, with which the access to different trays is indistincly obtained at both side parts of same, in a simultaneous way or through the front or bottom side.

The junction tray allows to house junctions and the fiber which corresponds thereto, and also it has the possibility of - being able to increase its warehousing twice the normal use under particular situations.

The tray for the connectors has a detachable coupler-holder, so allowing to be sustituted by the corresponding one to the connectors to be used.

The warehousing tray allows to house flexible or monofiber cable in independent areas, so obtaining an optimum identification of the different cables.

On the upper or lower part, depending on the cable access to the assembly, there are arranged split flanges fixing the necessary cable pairs.

On the outside and intermediate sides, there are arranged some parts allowing to suitably guide the different cables located in the assembly.

Also, the assembly has two intermediate sides located in the upper or lower inner middle partofsharer, depending on the access to the cables, at the high or low zone, and parallel to the outer sides, so allowing to make independent side spaces in order to optimize the arrangement and distribution of the difrent cables arriving at same.

The assembly has three large doors and two smaller ones, pivoting on each side, these doors serving to close both front voids left along and vertically between the center zone occupied by the trays and the sharer sides.

When the doors open, the access to the optical fiber cables is free, these cables being housed in these sides, as well as the removal of the trays on which they rest.

The assembly is mounted on an underformable lower frame which has four adjustable legs which are located at the corners thereof, so allowing a later correct levelling of sharer.

Lastly, the assembly is fitted with a second frame having an "U" shape, topping the upper zone of the assembly without hampering the easy access of all cables inside the sharer.

### BRIEF DESCRIPTION OF THE DRAWINGS

In order to complement the present description and to aid to a better understanding of the characteristics of the invention, the appending drawings which form a part of this specification, show, by way of illustrative and non-limiting example, the following figures:

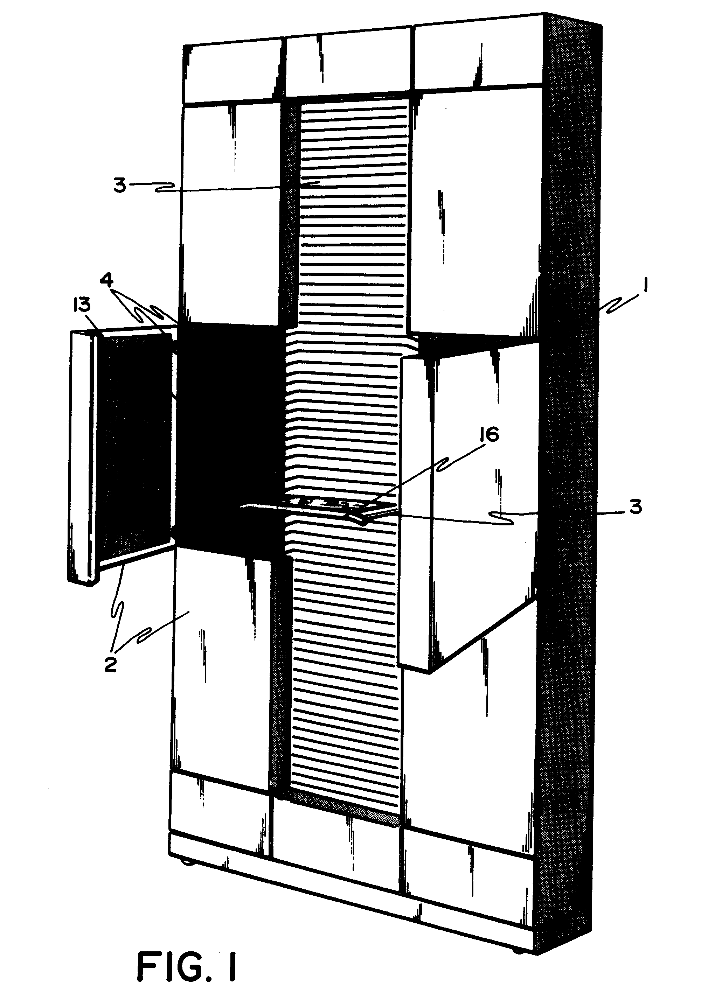

Figure 1 is a full perspective view of the junction and modular optical sharing terminal assembly, which is the object of - the present invention, showing the inner arrangement of same.

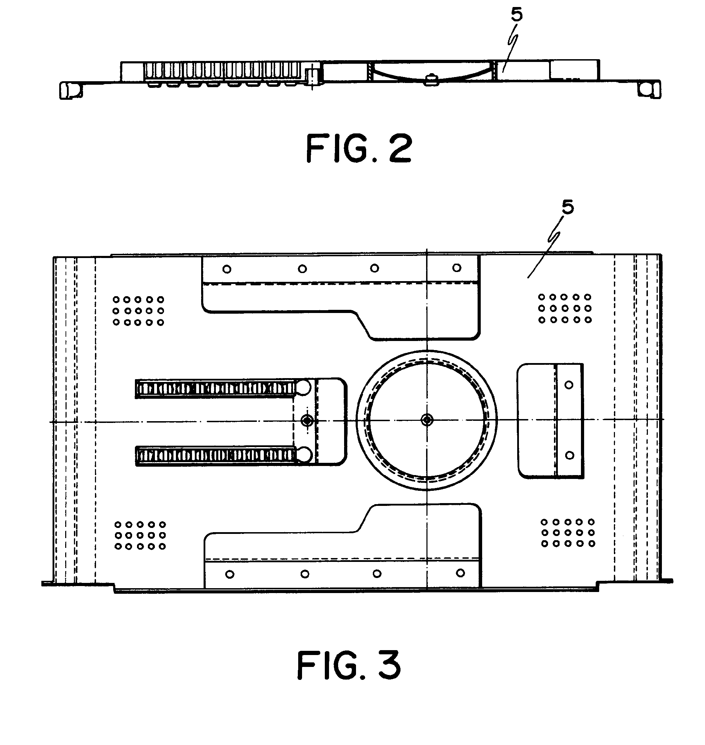

Figure 2 shows an elevational view of the front side of a junction tray.
Figure 3 shows a plan view of the object shown in Figure 2.

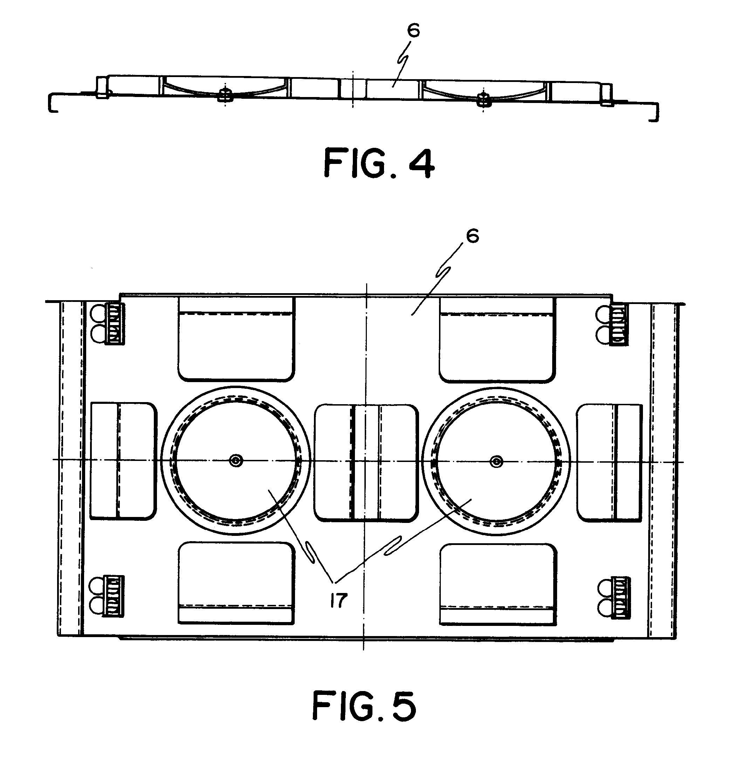

Figure 4 shows an elevational view of the front side of a warehousing tray.
Figure 5 shows a plan view of the object shown in Figure 4.

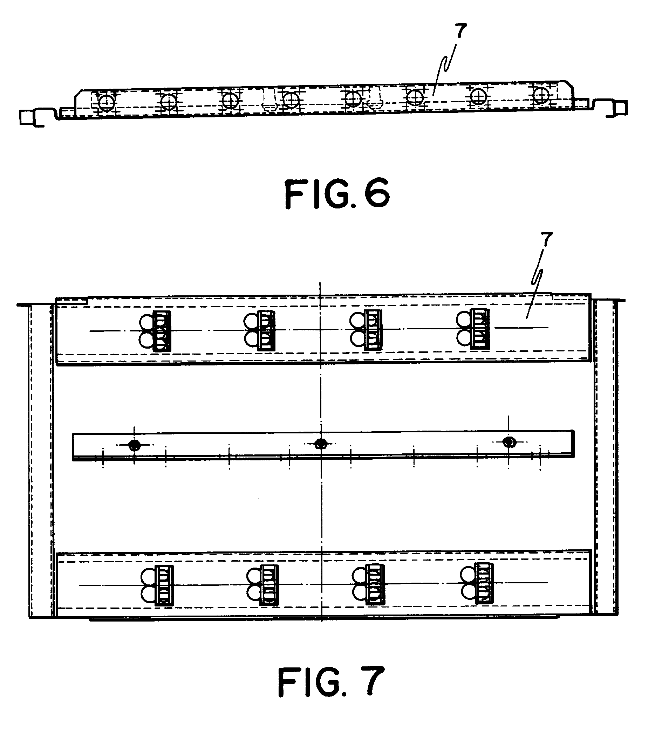

Figure 6 shows an elevational view of the front side of a connector tray.
Figure 7 shows a plan view of the object shown in Figure 6.

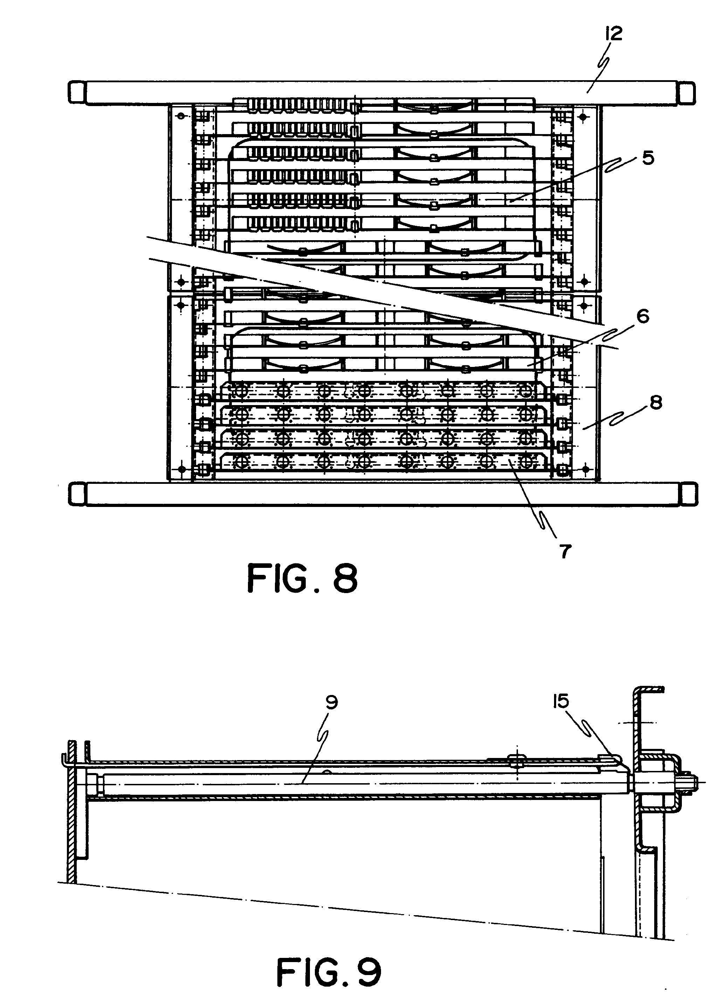

Figure 8 shows a view of the frame with one of the possible multiple arrangements of trays.
Figure 9 shows the tray guide, as well as the telescopic nature of same, togetherwith the blocking and removal system of same.

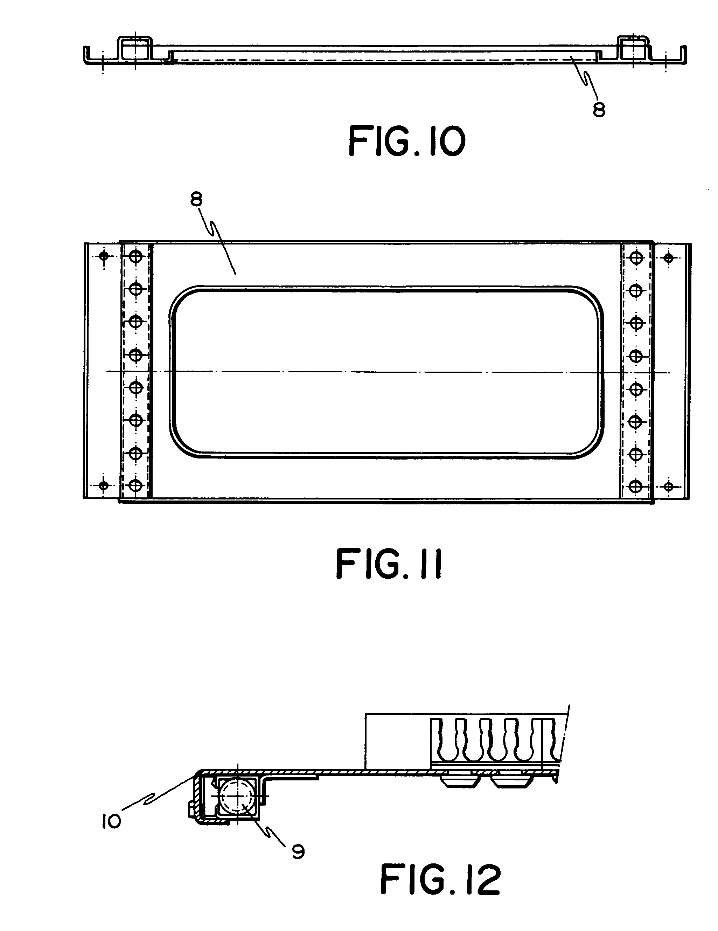

Figure 10 shows an elevational view of the supporting plate on which the several tray guides are incorporated.
Figure 11 shows a plan view of the object shown in Figure 10.
Figure 12 shows the system enabling to exchange the different trays on the guides.

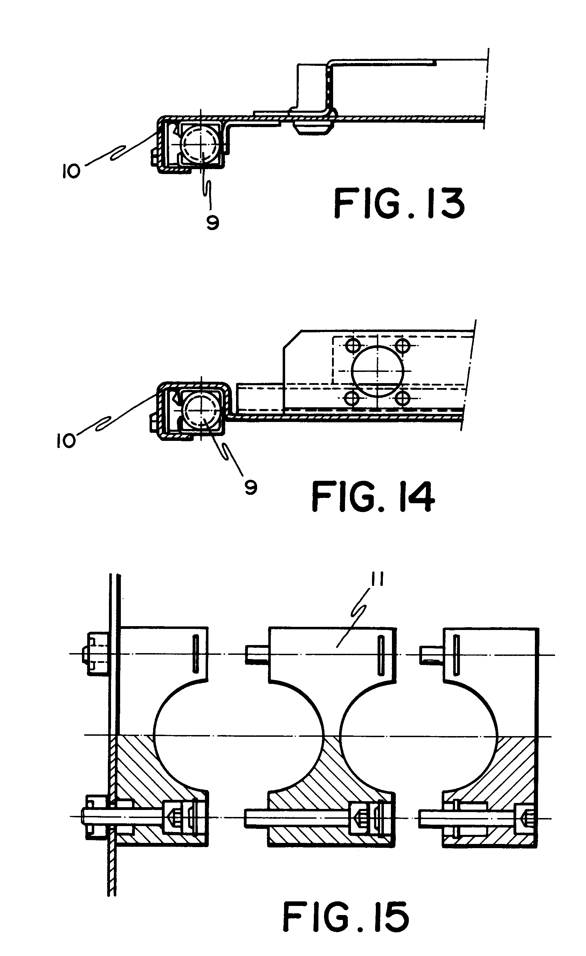

Figure 13 shows the object shown in Figure 12, in a different position.
Figure 14 shows again the object shown in Figures 12 and 13, in other moment of its performance or positioning.
Figure 15 shows a view of the split flange allowing to house different cables.

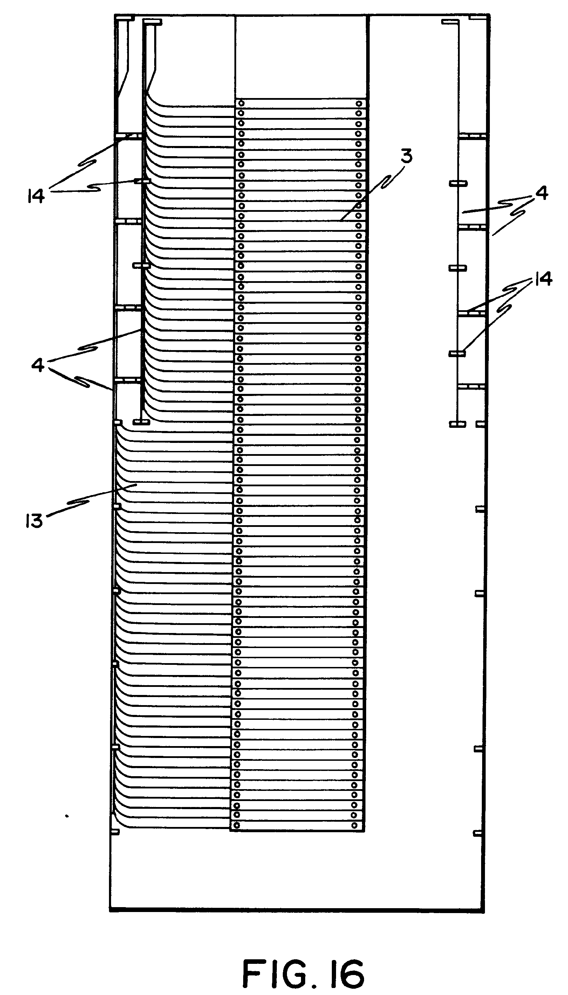

Figure 16 shows, lastly, a view of the supporting structure of trays, as well of the wiring distribution system with the gap of access cables at two heights.

### DETAILED DESCRIPTION OF THE PREFERRED EMBODIMENT

In view of these Figures, it can be seen that the junction and modular optical sharing terminal assembly (1), which is the object of the invention, is constituted starting from a vertical frame (12) housing and locking a set of frame-plates (8), each of which supporting several trays (3), by means of their respective tray guides (9).

All the junction (5), warehousing (6) and connector (7) trays have identical dimensions, their extremities ending at the same profile or anchoring band (10) resting on tray guides (9), also identical for the three types of junction (5), warehousing (6) and connector (7) trays.

Due to the above description, it is possible to exchange - these trays.

On the upper zone, and due to the fact that the access of cables to the assembly is located on this side, three split - flanges (11) are arranged, in order to allow to fix the necessary access cable pairs.

On the outer and intermediate sides, parts (14) are arranged allowing to adequately guide the different cables inserted into the assembly.

Also, the frame sides (4), parallel to the outer sides, allow to make independent side spaces in order to optimize the arrangement and distribution of the different cables arriving at same.

These trays are installed on telescopic guide (9), to be removed, and are topped at their front side by a moulded part (16) which allows to shape, in it, flexible ends allowing to resiliently act on trigger-bands (15) locking the tray in extreme positions of its travel.

The warehousing tray allows to have flexible or monofiber cables in independent zones (17), so obtaining an optimal identification of the different cables.

The assembly has three large doors (2) and two smaller pivoting on each of sides.

These large doors (2) close two front voids located along and vertically between the center zone occupied by the trays and the sides of sharer.

When the doors open, the access to the optical fiber cables (14) is gained, these cables being housed in these sides, and the tray (3) removal is also obtained on which they rest.

It is not considered necessary to extend this description for any expert in the art to understand the scope of the invention and the advantages derived from it.

The materials, size, shape and arrangement of its components will be open to variation, provided that it does not imply any alteration to the essence of the invention.

The terms under which this specification has been described should be always taken in an ample and non-limitative sense.

## Claims

1.- Ajunction and modular optical sharing terminal assembly (1) from those formed on a frame (12), on which several - frame-plates (8) are arranged, which act as a support for the tray modules (3) for containing warehousing (6), connectors (7) or junctions (5), and which is enclosed within an envelope, characterized in that the junction (5), connector (7) and warehousing (6) trays are identical in their perimetric shape, their extremities ending at the same profile or anchorage - band (10) resting on guides (9) which are also identical for the three types of junction (5), warehousing (6) and connector (7) trays.

2.- A junction and modular optical sharing terminal assembly (1), according to claim 1, characterized in that the - trays (5), (6) and (7) are fitted with a telescopic guide (9), incorporating an anchorage system shaped by a moulded part (16) for housing the cards which is located at the front side of trays (3), shaping in it flexible extremities on trigger-bands (15), locking each of the different trays (3) and plugging also the space left between the trays.

3.- A junction and modular optical sharing terminal assembly (1), according to any of the preceding claims, characterized in that it has split flanges (11), situated one on other in a modular way and fixing the access cables (13) which are necessary in each of them.

4.- A junction and modular optical sharing terminal assembly (1), according to any of the preceding claims, characterized in that it has inner sides (4), located on the upper or - lower half of the frame, for guiding and identifying the different access cables (11), separating them at several heights, the mechanical guiding being carried out by means of parts (14) inserted into the assembly.

5.- A junction and modular optical sharing terminal assembly (1), according to any of the preceding claims, characterized in that the arrival of the cables at the several trays (3) is indistinctly effected at both sides thereof, in a simultaneous way, as well as at the front or bottom side.
